# EUROPEAN PATENT APPLICATION

(11) **EP 4 776 019 A1**
(43) Date of publication of application: **15.07.2026**
(21) Application number: 25227828.8
(22) Date of filing: 31.12.2025
(51) Int. Cl.: G01S 7/03

(54) **RFIC AND ELECTRONIC DEVICE INCLUDING THE SAME**

(30) Priority: 14.01.2025 KR 20250005299
(71) Applicant: Samsung Electronics Co., Ltd., Suwon-si, Gyeonggi-do 16677 (KR)
(72) Inventor: YOO, Kyungwoo, 16677 Suwon-si, Gyeonggi-do (KR); KIM, Junseong, 16677 Suwon-si, Gyeonggi-do (KR); YU, Taewoo, 16677 Suwon-si, Gyeonggi-do (KR); HUR, Joonhoi, 16677 Suwon-si, Gyeonggi-do (KR); LIM, Hyung Sun, 16677 Suwon-si, Gyeonggi-do (KR); CHOI, Dooseok, 16677 Suwon-si, Gyeonggi-do (KR)
(74) Representative: Kuhnen & Wacker Patent- und Rechtsanwaltsbüro PartG mbB

(57) **Abstract**

A radio frequency integrated circuit, RFIC, (100a) includes a transmission circuit (110) that obtains a plurality of transmission signals. The RFIC (100a) also includes a plurality of low noise amplifiers (LNA) that amplify a plurality of reception signals corresponding to the plurality of transmission signals reflected by a target. The RFIC (100a) further includes a reception switching circuit (RSW) that includes a plurality of first ports (Ps1) coupled to the plurality of low noise amplifiers (LNAS1-LNAn) and a first single port (SP1) and couples one first port among the plurality of first ports (Ps1) to the first single port (SP1) based on switching. In addition, the RFIC (100a) includes a reception chain circuit (120) that is coupled to the first single port (SP1) and processes one reception signal corresponding to the one first port from among the plurality of reception signals in a baseband.

## Description

### BACKGROUND

Embodiments of the present disclosure described herein relate to an RFIC and an electronic device including the same.

Nowadays, due to the development of smart home environments, the pursuit of energy consumption efficiency, the improvement of user experience, the increase of necessity for contactless product recognition, and the pursuit of differentiation from existing products, the number of cases in which a radar technology is applied to home appliances is gradually increasing. Like a commercial radar (e.g., a vehicle radar), a radar system which is applied to home appliances may require the multiple input multiple output (MIMO) to extract location or speed information of the user.

However, because the radar system which is applied to home appliances has properties, such as relatively low complexity, low durability, and low power consumption, compared to the commercial radar, there may be an increasing need to make the weight of the radar system lighter compared to the commercial radar.

### SUMMARY

Embodiments of the present disclosure provide an RFIC lightened through a single-pole x-path throw (SPxT) switch and an electronic device including the same.

According to an embodiment, a radio frequency integrated circuit (RFIC) includes a transmission circuit that obtains a plurality of transmission signals, a plurality of low noise amplifiers that amplify a plurality of reception signals corresponding to the plurality of transmission signals reflected by a target, a reception switching circuit that includes a plurality of first ports coupled to the plurality of low noise amplifiers and a first single port and couples one first port among the plurality of first ports to the first single port based on switching, and a reception chain circuit that is coupled to the first single port and processes one reception signal corresponding to the one first port from among the plurality of reception signals in a baseband.

According to an embodiment, a radio frequency integrated circuit (RFIC) includes a transmission circuit that obtains a plurality of transmission signals, a reception switching circuit that includes a plurality of first ports and a first single port and couples one first port among the plurality of first ports to the first single port based on switching, a low noise amplifier that is coupled to the first single port, and a reception chain circuit that is coupled to the low noise amplifier and processes one reception signal corresponding to the one first port from among a plurality of reception signals corresponding to the plurality of transmission signals reflected from a target in a baseband.

According to an embodiment, an electronic device includes a processor that processes a baseband signal in a digital domain, a radio frequency integrated chip (RFIC) that obtains a plurality of transmission signals from the baseband signal or obtains the baseband signal from a plurality of reception signals corresponding to the plurality of transmission signals reflected from a target, a plurality of transmission antennas that transmits the plurality of transmission signals, and a plurality of reception antennas that receives the plurality of reception signals. The RFIC includes a transmission circuit that obtains the plurality of transmission signals, a plurality of low noise amplifiers that are coupled to the plurality of reception antennas and amplify the plurality of reception signals, a reception switching circuit that includes a plurality of first ports coupled to the plurality of low noise amplifiers and a first single port and couples one first port among the plurality of first ports to the first single port based on switching, and a reception chain circuit that is coupled to the first single port and processes one reception signal corresponding to the one first port from among the plurality of reception signals in a baseband.

### BRIEF DESCRIPTION OF THE FIGURES

The above and other objects and features of the present disclosure will become apparent by describing in detail embodiments thereof with reference to the accompanying drawings.
FIG. 1 illustrates an RFIC according to some example embodiments.
FIG. 2 illustrates an RFIC having a structure different from a structure of FIG. 1 according to some example embodiments.
FIG. 3 illustrates a transmission circuit according to some example embodiments.
FIG. 4 illustrates a transmission circuit having a structure different from a structure of FIG. 3 according to some example embodiments.
FIG. 5 illustrates a transmission circuit according to some example embodiments.
FIG. 6 illustrates a reception chain circuit according to some example embodiments.
FIG. 7 illustrates an electronic device according to some example embodiments.
FIGS. 8 and 9 are waveform diagrams for describing operations of transmitting and receiving transmission signals and reception signals when the same transmission antenna is activated during a unit time interval, according to some example embodiments.
FIGS. 10 and 11 are waveform diagrams for describing operations of transmitting and receiving transmission signals and reception signals when the same reception antenna is activated during a unit time interval, according to some example embodiments.
FIGS. 12 and 13 are waveform diagrams for describing operations of transmitting and receiving transmission signals and reception signals, according to some example embodiments.
FIG. 14 is a waveform diagram for describing an operation of transmitting a transmission signal when transmission antennas are simultaneously activated, according to some example embodiments.
FIG. 15 is a flowchart of an operating method of an electronic device according to some example embodiments.
FIG. 16 is a flowchart of an operating method of an electronic device according to some example embodiments.
FIG. 17 is a flowchart of an operating method of an electronic device according to some example embodiments.

### DETAILED DESCRIPTION

Below, embodiments of the present disclosure will be described in detail and clearly to such an extent that one skilled in the art easily carries out the present disclosure.

In the present disclosure, below, the terms (e.g., an antenna, a radio frequency integrated circuit (RFIC), a power amplifier (PA), a driver amplifier (DA), a low noise amplifier (LNA), a mixer, an analog baseband (ABB) circuit, a frequency synthesizer, a phase shifter, and a chain circuit) referring to an electronic device or a radio frequency (RF)-related part or product are merely used as an example for convenience of description, and embodiments of the present disclosure are not limited to the terms. That is, other terms having the same technical meaning may be used as the terms. For example, the RFIC may be replaced with an RF chip, an RF circuit, an RF module, etc.

In the present disclosure, below, the "coupled" between component A and component B may include both the case where component A and component B are connected and the case where component A and component B are electrically connected.

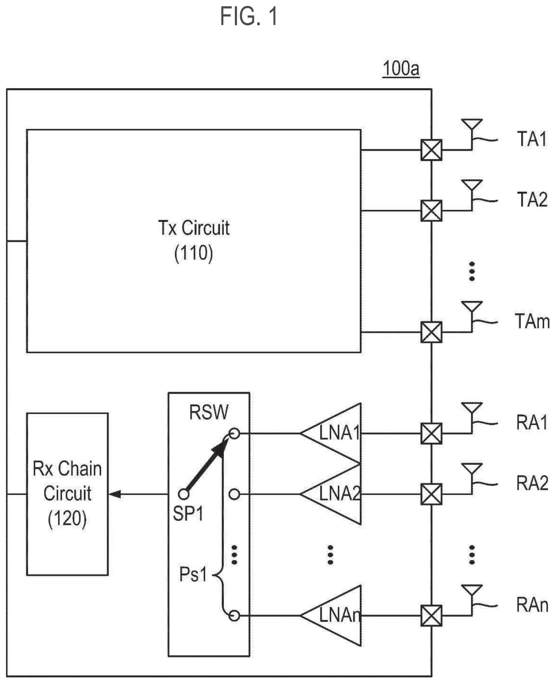

FIG. 1 illustrates an RFIC according to some example embodiments.

Referring to FIG. 1, an RFIC 100a according to some example embodiments may include a transmission circuit 110, a plurality of low noise amplifiers LNA1 to LNAn, a reception switching circuit RSW, and a reception chain circuit 120.

The transmission circuit 110 is coupled to a plurality of transmission antennas TA1 to TAm, and the plurality of low noise amplifiers LNA1 to LNAn are coupled to a plurality of reception antennas RA1 to RAn. For example, the plurality of transmission antennas TA1 to TAm and the plurality of reception antennas RA1 to RAn may be implemented in a substrate or a chip different from that of the RFIC 100a, the transmission circuit 110 may be coupled to the plurality of transmission antennas TA1 to TAm through multiple balls, and the plurality of low noise amplifiers LNA1 to LNAn may be coupled to the plurality of reception antennas RA1 to RAn through multiple balls.

The plurality of transmission antennas TA1 to TAm and the plurality of reception antennas RA1 to RAn may support the multiple input multiple output (MIMO) and may transmit or receive a signal or a power. The plurality of transmission antennas TA1 to TAm may transmit a plurality of transmission signals generated, obtained, or processed through the transmission circuit 110, and the plurality of reception antennas RA1 to RAn may receive a plurality of reception signals from the outside.

For example, when the RFIC 100a supports the radar system, the plurality of transmission antennas TA1 to TAm may transmit the plurality of transmission signals toward a target, and the plurality of reception antennas RA1 to RAn may receive the plurality of reception signals corresponding to the plurality of transmission signals reflected from the target. In this case, a time delay or a frequency variation according to the Doppler effect may occur in the plurality of reception signals depending on a location or speed of the target.

The plurality of transmission antennas TA1 to TAm and the plurality of reception antennas RA1 to RAn may form an antenna array. For example, the plurality of transmission antennas TA1 to TAm and/or the plurality of reception antennas RA1 to RAn may operate depending on beamforming.

The plurality of transmission antennas TA1 to TAm may include "m" transmission antennas (m being a natural number), and the plurality of reception antennas RA1 to RAn may include "n" reception antennas (n being a natural number equal to or different from m).

For example, when the RFIC 100a supports the radar system, the plurality of transmission signals and the plurality of reception signals may be frequency modulation continuous wave (FMCW) signals.

The transmission circuit 110 may be configured to obtain or generate the plurality of transmission signals to be transmitted to the target from a baseband signal.

The plurality of low noise amplifiers LNA1 to LNAn may be configured to amplify the plurality of reception signals. In detail, the plurality of low noise amplifiers LNA1 to LNAn may amplify the intensity of a reception signal while minimizing the noise. The plurality of low noise amplifiers LNA1 to LNAn may include as many low noise amplifiers as reception antennas RA1 to RAn, denoted as "n". As the plurality of low noise amplifiers LNA1 to LNAn are directly coupled to the plurality of reception antennas RA1 to RAn, the plurality of low noise amplifiers LNA1 to LNAn are capable of directly receiving the plurality of reception signals without passing through any other components. Accordingly, the noise figure for the plurality of reception signals may be improved.

The reception switching circuit RSW may be coupled to output terminals of the plurality of low noise amplifiers LNA1 to LNAn. The reception switching circuit RSW includes a plurality of first ports Ps1 and a first single port SP1, which are coupled to the plurality of low noise amplifiers LNA1 to LNAn. The number of the plurality of first ports Ps1 is "n". For example, the reception switching circuit RSW may be implemented with a single-pole x-path throw (SPxT) switch.

The reception switching circuit RSW may couple one of the plurality of first ports Ps1 to the first single port SP1 based on switching. One first port may be changed depending on the switching. According to various embodiments, a time during which one first port maintains the coupling with the first single port SP1 may change. When one first port and the first single port SP1 are coupled depending on the switching, one reception antenna corresponding to the one first port may be activated.

According to some example embodiments, the RFIC 100a may further include a logic circuit (not illustrated) which generates or obtains a control signal for the switching of the reception switching circuit RSW and applies the control signal to the reception switching circuit RSW. Alternatively, the logic circuit (not illustrated) may be included in an electronic device in which the RFIC 100a is capable of being included.

The first single port SP1 is coupled to the reception chain circuit 120.

The reception chain circuit 120 may be configured to process one reception signal corresponding to one first port from among the plurality of reception signals in the baseband. The RFIC 100a may include the single reception chain circuit 120 corresponding to the first single port SP1. According to some example embodiments, the reception chain circuit 120 may be configured to provide at least one of frequency mixing (or frequency down conversion), signal amplification and gain adjustment, buffering, filtering, power splitting, in-phase (I)/quadrature (Q) path provision, or analog-to-digital (AD) conversion, which is associated with the plurality of reception signals.

The RFIC 100a according to the above embodiments may operate only by using the single reception chain circuit 120 through the reception switching circuit RSW, and thus, the chip area may be reduced. Also, as the plurality of low noise amplifiers LNA1 to LNAn are coupled to the plurality of reception antennas RA1 to RAn, the noise figure for the plurality of reception signals may be improved.

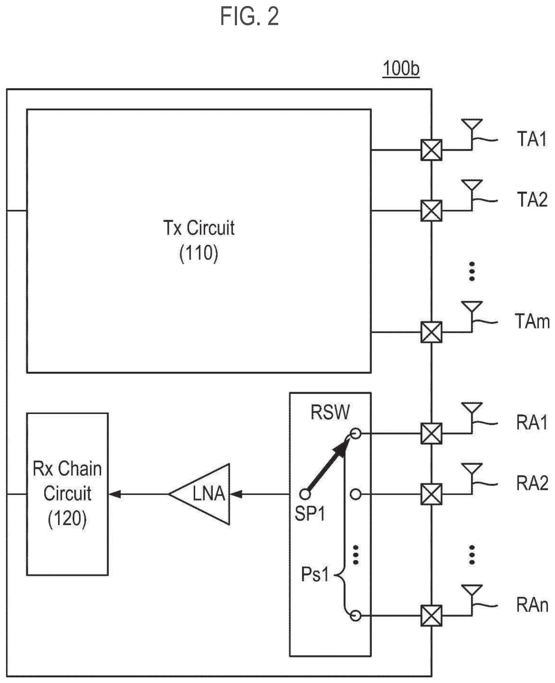

FIG. 2 illustrates an RFIC having a structure different from a structure of FIG. 1 according to some example embodiments. Below, additional description associated with the components described with reference to FIG. 1 will be omitted to avoid redundancy.

Referring to FIG. 2, the reception switching circuit RSW included in an RFIC 100b according to some example embodiments may be directly coupled to the plurality of reception antennas RA1 to RAn. Accordingly, the plurality of first ports Ps1 are coupled to the plurality of reception antennas RA1 to RAn.

The RFIC 100b according to some example embodiments include a single low noise amplifier LNA. An input terminal of the low noise amplifier LNA is coupled to the first single port SP1 of the reception switching circuit RSW. An output terminal of the low noise amplifier LNA is coupled to the reception chain circuit 120.

The reception switching circuit RSW according to some example embodiments couples the first single port SP1 to one of the plurality of first ports Ps1 depending on switching, and one reception signal corresponding to the one first port is provided to the input terminal of the low noise amplifier LNA through the first single port SP1. The low noise amplifier LNA may perform low noise amplification on the one reception signal and may output the amplified reception signal to the reception chain circuit 120.

Like the RFIC 100a, the RFIC 100b includes the single reception chain circuit 120. The reception chain circuit 120 is coupled to the low noise amplifier LNA.

Because the RFIC 100b according to the above embodiments is capable of operating based on the single low noise amplifier LNA, the RFIC 100b may decrease the number of low noise amplifiers LNA and the number of reception chain circuits 120.

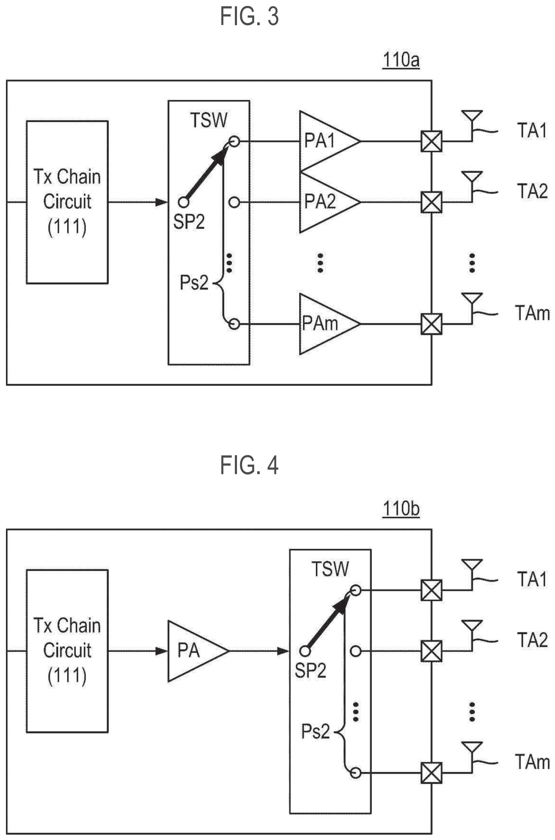

FIG. 3 illustrates a transmission circuit according to some example embodiments.

Referring to FIG. 3, a transmission circuit 110a according to some example embodiments may include a transmission chain circuit 111, a transmission switching circuit TSW, and a plurality of power amplifiers PA1 to PAm.

The transmission chain circuit 111 may be configured to process a baseband signal corresponding to a plurality of transmission signals. An RFIC may include the single transmission chain circuit 111 corresponding to a second single port SP2 included in the transmission switching circuit TSW. According to some example embodiments, the transmission chain circuit 111 may be configured to provide at least one of digital-to-analog (DA) conversion for a digital signal, frequency mixing (or frequency up conversion) for a baseband signal, frequency modulation, filtering, or amplification.

The transmission switching circuit TSW includes the second single port SP2 coupled to the transmission chain circuit 111 and a plurality of second ports Ps2 coupled to the plurality of power amplifiers PA1 to PAm. The number of the plurality of second ports Ps2 is "m". For example, the transmission switching circuit TSW may be implemented with the SPxT switch.

The transmission switching circuit TSW may be configured to couple one of the plurality of second ports Ps2 to the second single port SP2 based on switching. One second port may be changed depending on the switching. According to various embodiments, a time during which one second port maintains the coupling with the second single port SP2 may change. When one second port and the second single port SP2 are coupled depending on the switching, one transmission antenna corresponding to the one second port may be activated.

According to some example embodiments, the RFIC may further include a logic circuit (not illustrated) which generates or obtains a control signal for the switching of the transmission switching circuit TSW and applies the control signal to the transmission switching circuit TSW. Alternatively, the logic circuit (not illustrated) may be included in an electronic device in which the RFIC is capable of being included.

The plurality of power amplifiers PA1 to PAm are coupled to the plurality of second ports Ps2 and the plurality of transmission antennas TA1 to TAm. The plurality of power amplifiers PA1 to PAm may include as many power amplifiers as transmission antennas TA1 to TAm, denoted as "m". The plurality of power amplifiers PA1 to PAm may amplify signals output from the transmission chain circuit 111.

The transmission circuit 110a according to the above embodiments may operate only by using the single transmission chain circuit 111 through the transmission switching circuit TSW, and thus, the chip area may be reduced. Also, an RFIC including the transmission circuit 110a may simultaneously have the advantage of reducing the area, which is obtained through the transmission switching circuit TSW and the reception switching circuit RSW. In addition, as the plurality of power amplifiers PA1 to PAm are coupled to the plurality of transmission antennas TA1 to TAm, the isolation between a transmission path and a reception path may increase, and it may be possible to transmit a signal of a high output.

FIG. 4 illustrates a transmission circuit having a structure different from a structure of FIG. 3 according to some example embodiments.

Referring to FIG. 4, a transmission circuit 110b according to some example embodiments may include the transmission chain circuit 111, a power amplifier PA, and the transmission switching circuit TSW.

Unlike FIG. 3, the transmission switching circuit TSW may be directly coupled to the plurality of transmission antennas TA1 to TAm. Accordingly, the plurality of second ports Ps2 included in the transmission switching circuit TSW are coupled to the plurality of transmission antennas TA1 to TAm.

According to some example embodiments, an RFIC include a single power amplifier PA. An input terminal of the power amplifier PA is coupled to the transmission chain circuit 111, and an output terminal of the power amplifier PA is coupled to the second single port SP2.

Because the transmission circuit 110b according to the above embodiments operates only by using the single transmission chain circuit 111 and the single power amplifier PA, the chip area may be reduced. Also, an RFIC including the transmission circuit 110b may simultaneously have the advantage of reducing the area, which is obtained through the transmission switching circuit TSW and the reception switching circuit RSW.

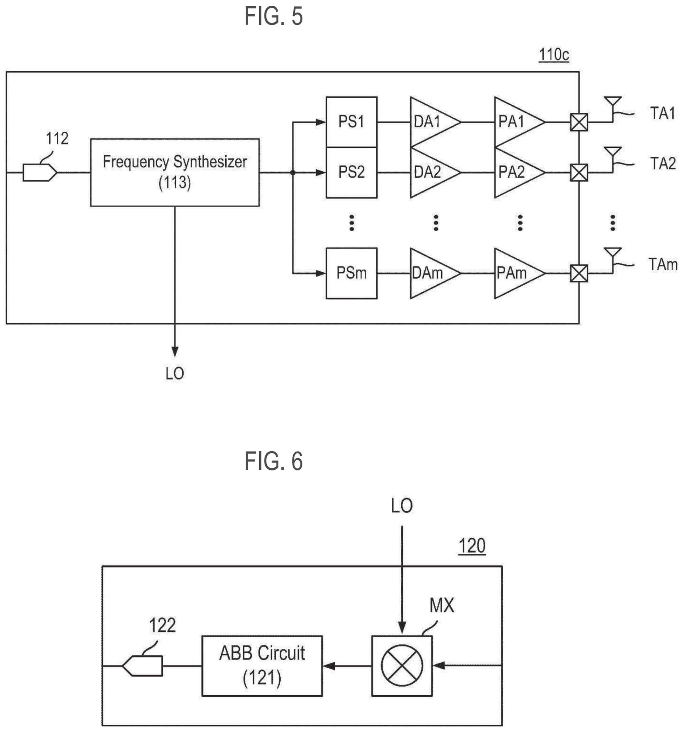

FIG. 5 illustrates a transmission circuit according to some example embodiments.

Referring to FIG. 5, a transmission circuit 110c according to some example embodiments includes a digital-to-analog converter (DAC) 112, a frequency synthesizer 113, a plurality of phase shifters PS1 to PSm, a plurality of driver amplifiers DA1 to DAm, and the plurality of power amplifiers PA1 to PAm.

The DAC 112 is configured to output a baseband signal based on DA conversion. The DAC 112 converts a digital signal into a baseband signal being an analog signal.

The frequency synthesizer 113 may be configured to perform at least one of frequency up conversion or frequency modulation in association with the baseband signal converted by the DAC 112. As some example embodiments, the frequency synthesizer 113 may obtain or generate a local oscillator (LO) signal LO and may perform the frequency up conversion on the baseband signal based on the LO signal LO. The frequency synthesizer 113 may output the obtained or generated LO signal LO.

As some example embodiments, the frequency synthesizer 113 may linearly increase the frequency of the LO signal LO over time. In this case, a signal up-converted according to the LO signal LO may be the FMCW signal.

The plurality of phase shifters PS1 to PSm are configured to perform the phase conversion on the output of the frequency synthesizer 113. Each of the plurality of phase shifters PS1 to PSm may individually adjust a signal input thereto (i.e., the output of the frequency synthesizer 113). A plurality of transmission signals may form a beam in a specific direction through the phase conversion of the plurality of phase shifters PS1 to PSm.

The plurality of driver amplifiers DA1 to DAm are configured to amplify outputs of the plurality of phase shifters PS1 to PSm and to output the amplified signals to the plurality of phase shifters PS1 to PSm. Intensities of the outputs of the plurality of phase shifters PS1 to PSm may be primarily amplified through the plurality of driver amplifiers DA1 to DAm.

The plurality of power amplifiers PA1 to PAm are configured to amplify outputs of the plurality of driver amplifiers DA1 to DAm.

The plurality of phase shifters PS1 to PSm include "m" phase shifters, the plurality of driver amplifiers DA1 to DAm include "m" driver amplifiers, and the plurality of power amplifiers PA1 to PAm include "m" power amplifiers.

According to some example embodiments, the transmission circuit 110c may further include a power splitter (not illustrated) in addition to the above components. The power splitter may split the output of the frequency synthesizer 113 into a number of paths, denoted as "m", corresponding to the plurality of transmission antennas TA1 to TAm.

According to the above embodiments, the transmission circuit 110c may improve a signal-to-noise ratio (SNR) by simultaneously transmitting transmission signals through a plurality of transmission chains (the plurality of phase shifters PS1 to PSm, the plurality of driver amplifiers DA1 to DAm, and the plurality of power amplifiers PA1 to PAm). Also, an RFIC including the transmission circuit 110c may simultaneously have the advantage of reducing the chip area, which is obtained through the reception switching circuit RSW, together with the improvement of the SNR.

The above transmission circuits of FIGS. 3 to 5 may correspond to the transmission circuit of FIG. 1 and/or FIG. 2.

FIG. 6 illustrates a reception chain circuit according to some example embodiments.

Referring to FIG. 6, the reception chain circuit 120 according to some example embodiments includes a mixer MX, an analog baseband circuit 121, and an analog-to-digital converter (ADC) 122. As some example embodiments, the reception chain circuit 120 may correspond to the reception chain circuit described with reference to FIG. 1 and/or FIG. 2.

The mixer MX is configured to perform frequency down conversion on the output of the low noise amplifier based on the LO signal LO. As some example embodiments, the LO signal LO may be provided to the frequency synthesizer described with reference to FIG. 5. The mixer MX outputs a signal having the down-converted frequency to the analog baseband circuit 121.

The analog baseband circuit 121 is configured to output the baseband signal based on the processing on the output of the mixer MX. As some example embodiments, the analog baseband circuit 121 may be configured to perform at least one of signal amplification and gain adjustment, buffering, filtering, power splitting, or IO path provision.

The ADC 122 is configured to perform AD conversion on the baseband signal. The baseband signal may be converted into a digital signal through the AD conversion.

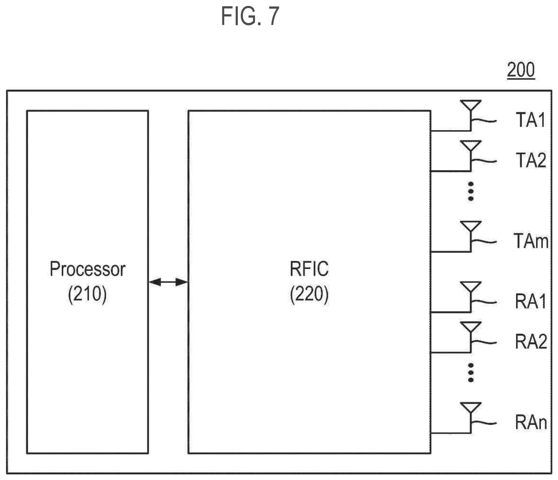

FIG. 7 illustrates an electronic device according to some example embodiments.

Referring to FIG. 7, an electronic device 200 according to some example embodiments includes a processor 210, an RFIC 220, the plurality of transmission antennas TA1 to TAm, and the plurality of reception antennas RA1 to RAn. For example, the electronic device 200 may be a transceiver.

The processor 210 is configured to process the baseband signal in a digital domain. For example, the processor 210 may obtain, generate, or process the digital signal corresponding to the transmission signal and may provide the digital signal to the RFIC 220. Alternatively, the processor 210 may be provided with the digital signal corresponding to the reception signal from the RFIC 220 and may obtain information by processing the digital signal.

As some example embodiments, the processor 210 may process the digital signal, based on fast Fourier transform (FFT), short-time Fourier transform (STFT), 2D and/or 3D FFT.

As some example embodiments, the processor 210 may detect a target through a constant false alarm rate (CFAR) for the digital signal corresponding to the reception signal. The CFAR is an algorithm for uniformly setting a false alarm which is determined as there is a reflected signal even though a signal reflected from the target does not exist due to a noise level fluctuating due to a change in a surrounding environment. The CFAR may detect the target from the reception signal based on the noise level corresponding to the surrounding environment and a threshold value.

As some example embodiments, the processor 210 may calculate a distance from the target based on a frequency difference of the transmission signal and the reception signal (i.e., based on a bit frequency), may calculate an angle with the target based on a phase difference of the transmission signal and the reception signal, or may calculate a speed of the target based on the Doppler effect.

The RFIC 220 is configured to obtain a plurality of transmission signals from the baseband signal or to obtain the baseband signal from a plurality of reception signals corresponding to a plurality of transmission signals reflected from the target. According to various embodiments, the RFIC 220 may be configured based on FIGS. 1 to 6 described above. That is, the RFIC 220 may include the transmission switching circuit TSW which is coupled between the transmission chain circuit and the plurality of power amplifiers PA1 to PAm or is coupled to output terminals of the plurality of power amplifiers PA1 to PAm and/or a reception switching circuit which is coupled between the reception chain circuit and the plurality of low noise amplifiers LNA1 to LNAn or is coupled to input terminals of the plurality of low noise amplifiers LNA1 to LNAn.

The plurality of transmission antennas TA1 to TAm are configured to transmit the plurality of transmission signals, and the plurality of reception antennas RA1 to RAn are configured to receive the plurality of reception signals.

The electronic device 200 according to the above embodiments may become more lightweight through the transmission switching circuit and/or the reception switching circuit.

Below, embodiments associated with an operation of an electronic device according to the above embodiments will be described. Below, a time point "tx" (x being a natural number) is defined as indicating an arbitrary time point only in each drawing, and it is reasonable that arbitrary time points are identical to each other or different from each other.

Below, the following details may be assumed.
- Each transmission signal and each reception signal have the same pulse width of Tc and the same pulse repetition interval (PRI) of Tp (the PRI is defined as a time interval between start points of two consecutive transmission signals, but for convenience, in the present disclosure, it is assumed that a time interval between start points of reception signals is also the same as the PRI of the transmission signal).
- A transmission signal and a reception signal matching each other are transmitted and received during the same time interval.

However, this is provided for convenience of description, and embodiments of the present disclosure are not limited thereto. For example, a reception signal received through an actual channel may have a pulse width and a PRI slightly different from those of the transmission signal, and the reception signal may be slightly delayed with respect to the transmission signal.

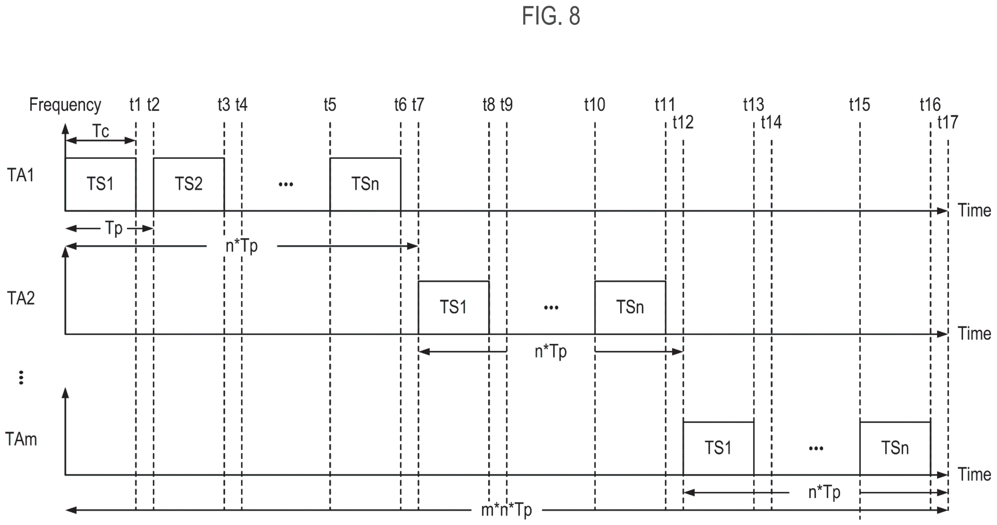

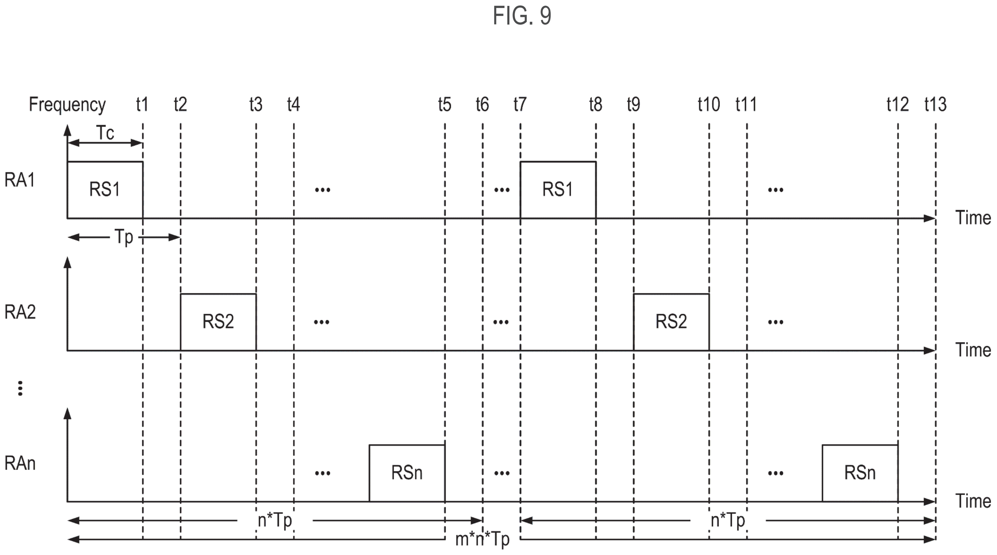

FIGS. 8 and 9 are waveform diagrams for describing operations of transmitting and receiving transmission signals and reception signals when the same transmission antenna is activated during a unit time interval, according to some example embodiments.

First, referring to FIG. 8, a transmission circuit (e.g., refer to FIGS. 1 to 4) drives one transmission antenna among the plurality of transmission antennas TA1 to TAm corresponding to a plurality of transmission signals during a unit time interval. In detail, a transmission switching circuit included in the transmission circuit couples one second port to a second single port during the unit time interval. Accordingly, an electronic device repeatedly transmits transmission signals through one transmission antenna during the unit time interval. An interval of (Tp - Tc) exists between transmission signals. For example, an interval from t1 to t2 exists between a first transmission signal TS1 and a second transmission signal TS2.

For example, the unit time interval may be defined as "nTp" corresponding to the product of the number of reception antennas and the PRI. Accordingly, in FIGS. 8 and 9, the unit time interval is a time interval in which one transmission antenna repeatedly transmits n transmission signals TS1 to TSn while the one transmission antenna is activated or a time interval in which n reception antennas sequentially receive n reception signals RS1 to RSn. The number of transmission antennas, denoted as "n", which one transmission antenna repeatedly transmits during the unit time interval is adjusted depending on the number of reception antennas, denoted as "n".

For example, the electronic device repeatedly transmits the n transmission signals TS1 to TSn through the first transmission antenna TA1 during the unit time interval defined as a time interval until t7. Afterwards, the electronic device repeatedly transmits the n transmission signals TS1 to TSn through the second transmission antenna TA2 during a new unit time interval from t7 to t12. The electronic device may repeat the operation of repeatedly transmitting the n transmission signals TS1 to TSn during the unit time interval depending on the above embodiments, as many as "m". According to the above description, the electronic device may repeat the operation corresponding to the unit time interval while sequentially switching the transmission antennas TA1 to TAm through the transmission switching circuit during m unit time intervals mnTp.

Next, referring to FIG. 9, to correspond to the operation of the transmission circuit of FIG. 8, a reception switching circuit (e.g., refer to FIGS. 1 and 2) may sequentially switch a plurality of first ports during the unit time interval of nTp. The plurality of reception antennas RA1 to RAn may be sequentially activated depending on the switching.

For example, during the unit time interval until t6, the first to n-th reception antennas RA1 to RAn may receive a single reception signal while the first to n-th reception antennas RA1 to RAn are sequentially activated. The first reception antenna RA1 receives a first reception signal having the pulse width of Tc until t1, and the second reception antenna RA2 receives a second reception signal having a pulse width from t2 to t3. When the n-th reception antenna RAn completes the reception of an n-th reception signal, one unit time interval ends.

The electronic device may repeat the operation according to the above embodiments, that is, the operation of repeatedly receiving the n reception signals RS1 to TSn during the unit time interval, as many as "m". According to the above description, the electronic device may repeat the operation of sequentially switching the reception antennas RA1 to RAn through the reception switching circuit during one unit time interval, as many as "m" during the m unit time intervals mnTp.

According to the above embodiments, the reception signals received by the different reception antennas RA1 to RAn are adjacent to each other on the time domain compared to the transmission signals transmitted by the different transmission antennas TA1 to TAm, which may be advantageous to maintain the coherency between reception signals.

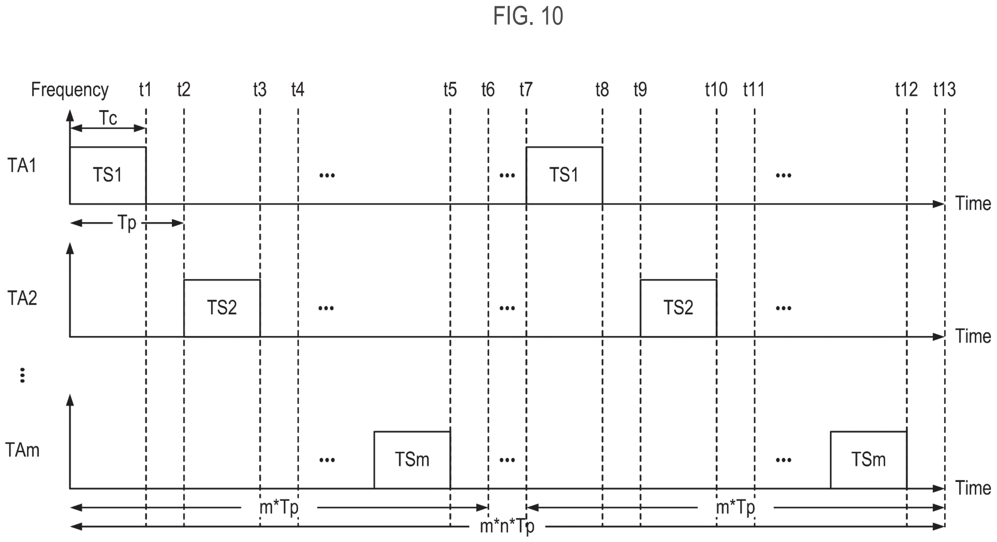

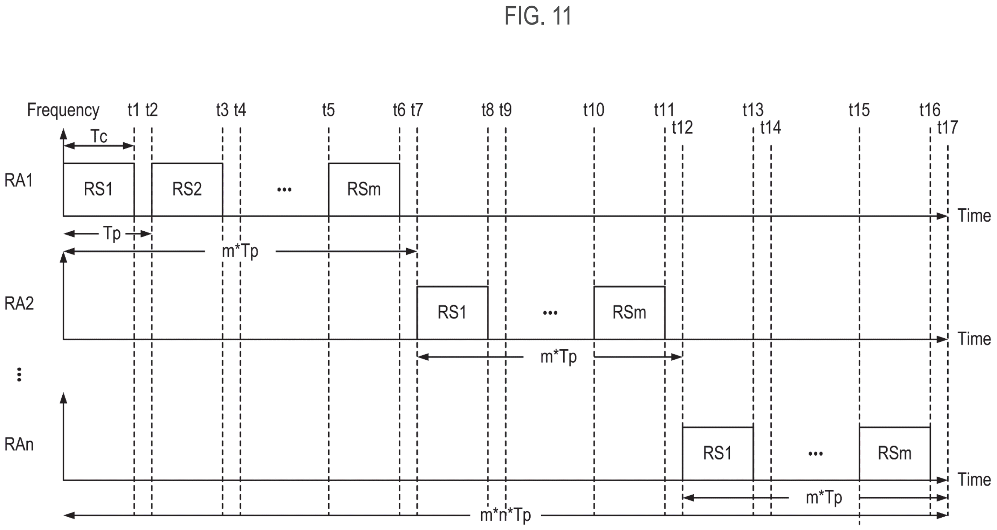

FIGS. 10 and 11 are waveform diagrams for describing operations of transmitting and receiving transmission signals and reception signals when the same reception antenna is activated during a unit time interval, according to some example embodiments.

First, referring to FIG. 10, a transmission switching circuit (e.g., refer to FIGS. 1 to 4) may sequentially switch a plurality of second ports during the unit time interval. The plurality of transmission antennas TA1 to TAm may be sequentially activated depending on the switching.

For example, the unit time interval may be defined as "mTp" corresponding to the product of the number of transmission antennas and the PRI. Accordingly, in FIGS. 10 and 11, the unit time interval is a time interval in which m transmission antennas TA1 to TAm sequentially transmit m transmission signals TS1 to TSm while one reception antenna is activated or a time interval in which one reception antenna sequentially receives m reception signals RS1 to RSm.

For example, during the unit time interval until t6, the first to m-th transmission antennas TA1 to TAm may transmit a single transmission signal while the first to m-th transmission antennas TA1 to TAm are sequentially activated. The first transmission antenna TA1 transmits a first transmission signal having the pulse width of Tc until t1, and the second transmission antenna TA2 receives a second transmission signal having a pulse width from t2 to t3. When the m-th transmission antenna TAm completes the transmission of an m-th transmission signal, one unit time interval ends.

The electronic device may repeat the operation of repeatedly transmitting the m transmission signals TS1 to TSm during the unit time interval depending on the above embodiments, as many as "n". According to the above description, the electronic device may repeat the operation of sequentially switching the transmission antennas TA1 to TAm through the transmission switching circuit during one unit time interval, as many as "n" during the n unit time intervals mnTp.

Next, referring to FIG. 11, to correspond to the operation of the transmission circuit of FIG. 10, a reception path (e.g., refer to FIGS. 1 and 2) drives one reception antenna among the plurality of reception antennas RA1 to RAn corresponding to a plurality of reception signals during the unit time interval. Accordingly, the electronic device continuously receives the reception signals through one reception antenna during the unit time interval.

The number of reception signals, denoted as "m", which one reception antenna repeatedly receives during the unit time interval is adjusted depending on the number of transmission antennas, denoted as "m".

For example, the electronic device continuously receives m reception signals RS1 to RSm through the first reception antenna RA1 during the unit time interval defined as a time interval until t7. Afterwards, the electronic device continuously receives the m reception signals RS1 to RSm through the second reception antenna RA2 during a new unit time interval from t7 to t12. The electronic device may repeat the operation of continuously receiving the m reception signals RS1 to RSm during the unit time interval depending on the above embodiments, as many as "n". According to the above description, the electronic device may repeat the operation corresponding to the unit time interval while sequentially switching the reception antennas RA1 to RAn through the reception switching circuit during m unit time intervals mnTp.

According to the above embodiments, the transmission signals received by the different transmission antennas TA1 to TAm are adjacent to each other on the time domain compared to the reception signals received by the different reception antennas RA1 to RAn, which may be advantageous to maintain the coherency between transmission signals.

In the above embodiments, the unit time interval mTp or nTp may be considered as a coherent processing interval CPI being a unit interval in which reception signals are coherently processed.

When a target CPI value or a target PRI value exists, according to various embodiments, the electronic device may adjust the CPI value or the PRI value by adjusting a coupling time between a single port and one port corresponding to one transmission antenna and/or one reception antenna through the transmission switching circuit and/or the reception switching circuit. For example, the electronic device may increase the coupling time such that the CPI value and the PRI value increase or may decrease the coupling time such that the CPI value and the PRI value decrease.

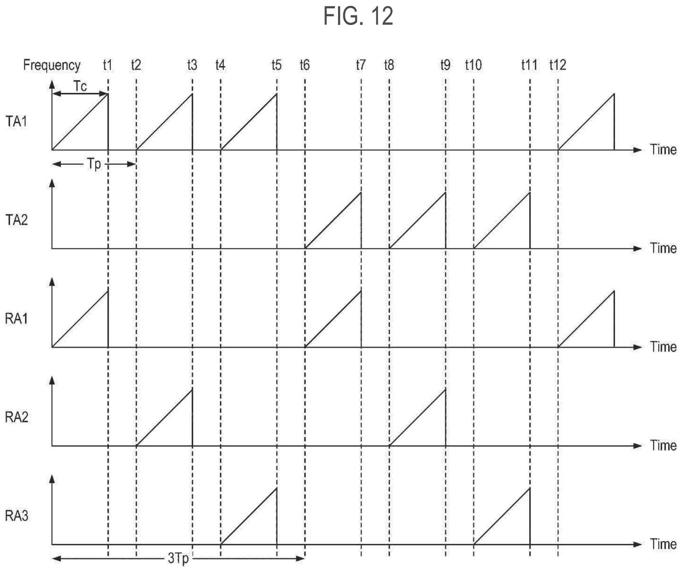

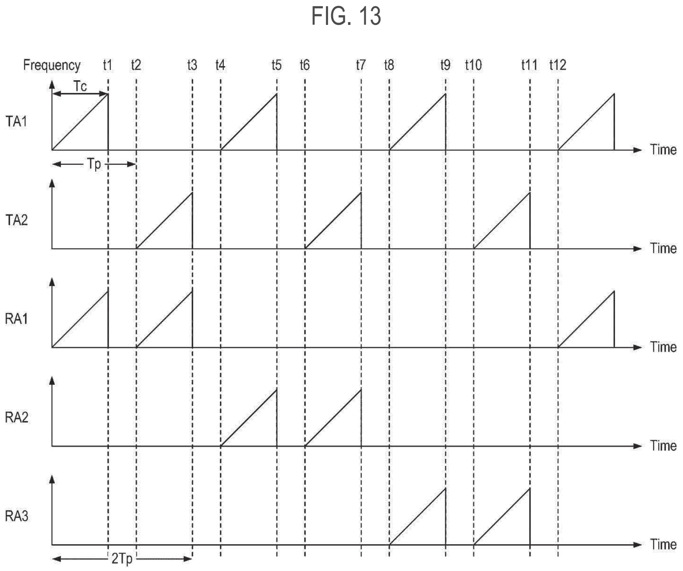

FIGS. 12 and 13 are waveform diagrams for describing operations of transmitting and receiving transmission signals and reception signals, according to some example embodiments. In FIGS. 12 and 13, for example, it is assumed that two transmission signals TX1 and TX2 and three reception signals RX1 to RX3 are used and a transmission signal and a reception signal are FMCW signals. However, this is provided for convenience of description, and embodiments of the present disclosure are not limited thereto.

First, referring to FIG. 12, the first transmission antenna TA1 repeatedly transmits three transmission signals during the unit time interval until t6, to be identical to the number of reception antennas RA1 to RAn. The PRI corresponding to Tp is defined for each transmission signal. The unit time interval is defined as 3Tp corresponding to the product of the number of reception antennas and the PRI.

While the first transmission antenna TA1 is activated, the first to third reception antennas RA1 to RA3 are sequentially activated. For example, the first reception antenna RA1 receives a transmission signal until t1, the second reception antenna RA2 receives a transmission signal from t2 to t3, and the third reception antenna RA3 receives a transmission signal from t4 to t5.

Afterwards, the second transmission antenna TA2 repeatedly transmits three transmission signals during the unit time interval from t6 to t12. While the second transmission antenna TA2 is activated, again, the first to third reception antennas RA1 to RA3 receive three reception signals while the first to third reception antennas RA1 to RA3 are sequentially activated.

Next, referring to FIG. 13, during the unit time interval until t4, the first to third reception antennas RA1 to RA3 are sequentially activated. The unit time interval is defined as 2Tp corresponding to the product of the number of transmission antennas and the PRI. For example, the first transmission antenna TA1 transmits a transmission signal until t1, the second transmission antenna TA2 transmits a transmission signal from t2 to t3, and the first transmission antenna TA1 transmits a transmission signal from t4 to t5.

A first reception antenna repeatedly receives two transmission signals during the unit time interval until t4, to be identical to the number of transmission antennas TA1 to TAm.

Afterwards, during a next unit time interval from t4 to t8, again, the first and second transmission antennas TA1 and TA2 transmit two transmission signals while the first and second transmission antennas TA1 and TA2 are sequentially activated. A second reception antenna repeatedly receives two transmission signals during the unit time interval from t4 to t8.

Afterwards, during a next unit time interval from t8 to t12, again, the first and second transmission antennas TA1 and TA2 transmit two transmission signals while the first and second transmission antennas TA1 and TA2 are sequentially activated, and a third reception antenna repeatedly receives two transmission signals.

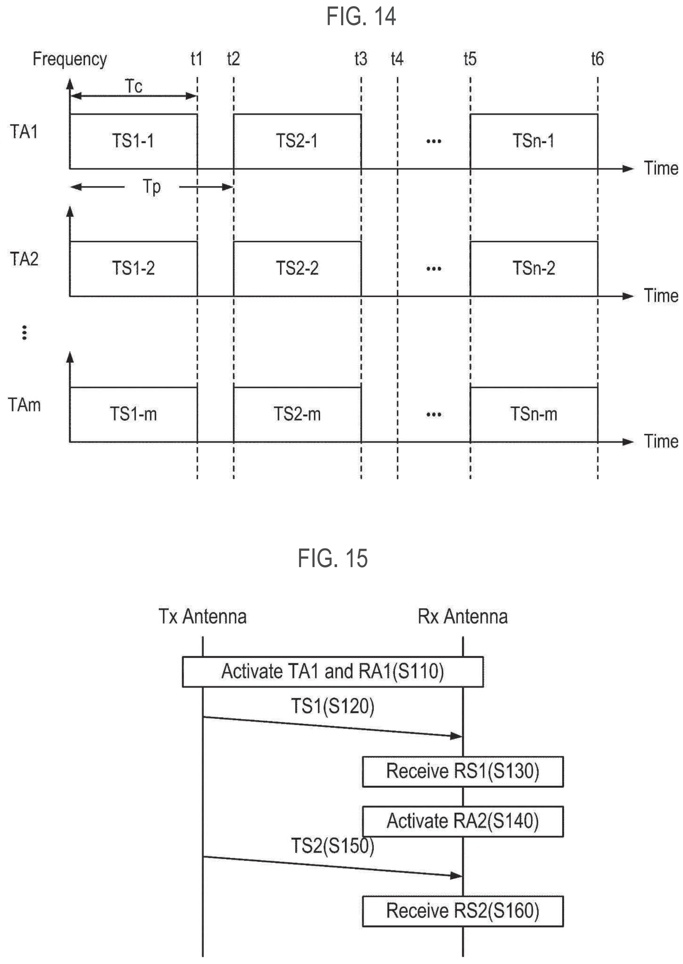

FIG. 14 is a waveform diagram for describing an operation of transmitting a transmission signal when transmission antennas are simultaneously activated, according to some example embodiments.

Referring to FIG. 14, a transmission circuit (e.g., refer to FIG. 5) according to some example embodiments may transmit a plurality of transmission signals through the plurality of transmission antennas TA1 to TAm every PRI. That is, the transmission circuit may drive all of the plurality of transmission antennas TA1 to TAm corresponding to the plurality of transmission signals during the unit time interval.

Under control of the transmission circuit, the plurality of transmission signals may have different phases for respective transmission antennas TA1 to TAm through a plurality of phase shifters.

The pulse width of Tc and the PRI of Tp are defined for each transmission signal. All of the m transmission antennas TA1 to TAm are activated every PRI. The m transmission antennas TA1 to TAm transmit first transmission signals TS1-1 to TS1-m until t1, respectively and transmit second transmission signals TS2-1 to TS2-m during a time interval from t2 to t3, respectively, in a next PRI from t2 to t4. The m transmission antennas TA1 to TAm repeat the transmission operation as many as "n" corresponding to the number of reception antennas. That is, finally, the m transmission antennas TA1 to TAm transmit n-th transmission signals TAn-1 to TAn-m during a time interval from t5 to t6, respectively.

FIG. 15 is a flowchart of an operating method of an electronic device according to some example embodiments.

Referring to FIG. 15, in operation S110, the electronic device activates the first transmission antenna TA1 and the first reception antenna RA1. According to the above embodiments, the electronic device may activate the first transmission antenna TA1 through the transmission switching circuit and may activate the first reception antenna RA1 through the reception switching circuit.

In operation S120, the electronic device transmits the first transmission signal TS1 through the first transmission antenna TA1. The first transmission signal TS1 may be reflected through the target and may have a given time delay.

In operation S130, the electronic device receives the first reception signal RS1 corresponding to the first transmission signal TS1 reflected through the target.

In operation S140, the electronic device activates the second reception antenna RA2 through switching.

In operation S150, the electronic device transmits the second transmission signal TS2 through the first transmission antenna TA1.

In operation S160, the electronic device receives the reflected second reception signal RS2 through the second reception antenna RA2.

The operations according to the above embodiments may be repeatedly performed depending on the number of reception antennas. Alternatively, the operations according to the above embodiments may be repeatedly performed in units of unit time interval.

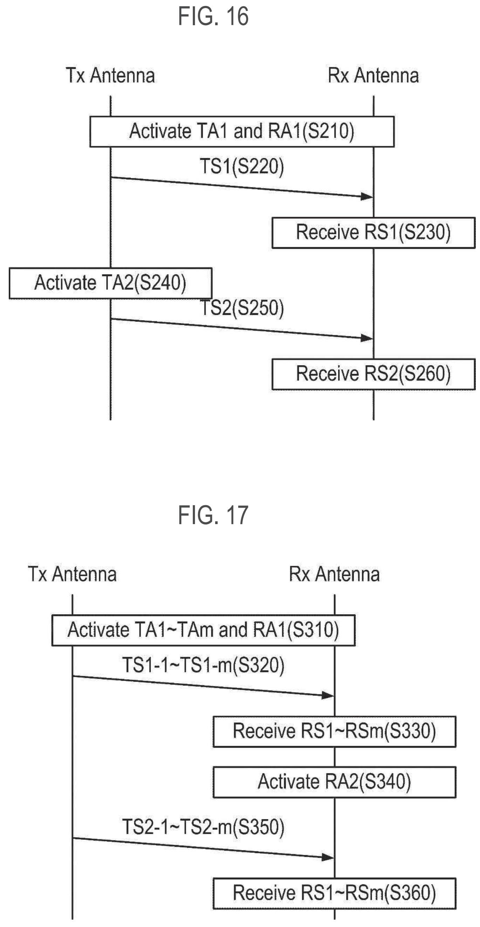

FIG. 16 is a flowchart of an operating method of an electronic device according to some example embodiments.

Referring to FIG. 16, in operation S210, the electronic device activates the first transmission antenna TA1 and the first reception antenna RA1.

In operation S220, the electronic device transmits the first transmission signal TS1 through the first transmission antenna TA1. The first transmission signal TS1 may be reflected through the target and may have a given time delay.

In operation S230, the electronic device receives the first reception signal RS1 corresponding to the first transmission signal TS1 reflected, through the first reception antenna RA1.

In operation S240, the electronic device activates the second transmission antenna TA2 through switching.

In operation S250, the electronic device transmits the second transmission signal TS2 through the second transmission antenna TA2.

In operation S260, the electronic device receives the second reception signal RS2 corresponding to the second transmission signal TS2 reflected, through the first reception antenna RA1.

The operations according to the above embodiments may be repeatedly performed depending on the number of transmission antennas. Alternatively, the operations according to the above embodiments may be repeatedly performed in units of unit time interval.

FIG. 17 is a flowchart of an operating method of an electronic device according to some example embodiments.

Referring to FIG. 17, in operation S310, the electronic device activates the plurality of transmission antennas TA1 to TAm and the first reception antenna RA1.

In operation S320, the electronic device transmits the first to m-th transmission signals TS1 to TSm through the plurality of transmission antennas TA1 to TAm. The first to m-th transmission signals TS1 to TSm may be reflected through the target and may have a given time delay.

In operation S330, the electronic device receives the first to m-th reception signals RS1 to RSm corresponding to the first to m-th transmission signals TS1 to TSm reflected, through the first reception antenna RA1.

In operation S340, the electronic device activates the second reception antenna RA2 through switching.

In operation S350, the electronic device transmits the first to m-th transmission signals TS1 to TSm through the plurality of transmission antennas TA1 to TAm.

In operation S360, the electronic device receives the first to m-th reception signals RS1 to RSm corresponding to the first to m-th transmission signals TS1 to TSm reflected, through the second reception antenna RA2.

The operations according to the above embodiments may be repeatedly performed depending on the number of reception antennas. Alternatively, the operations according to the above embodiments may be repeatedly performed in units of unit time interval.

According to the present disclosure, an RFIC lightened through a single-pole x-path throw (SPxT) switch and an electronic device including the same may be provided.

While the present disclosure has been described with reference to embodiments thereof, it will be apparent to those of ordinary skill in the art that various changes and modifications may be made thereto without departing from the scope of the present disclosure as set forth in the following claims.

## Claims

1. A radio frequency integrated circuit, RFIC, (100a), comprising:
a transmission circuit (110, 110a, 110b, 110c) configured to obtain a plurality of transmission signals (TS1-TSm);
a plurality of low noise amplifiers (LNA1-LNAn) configured to amplify a plurality of reception signals (RS1-RSn) corresponding to the plurality of transmission signals (TS1-TSm) reflected by a target;
a reception switching circuit (RSW) including a plurality of first ports (Ps1) coupled to the plurality of low noise amplifiers (LNA1-LNAn) and a first single port (SP1), and configured to couple one first port among the plurality of first ports (Ps1) to the first single port (SP1) based on switching; and
a reception chain circuit (120) coupled to the first single port (SP1), and configured to process one reception signal corresponding to the one first port from among the plurality of reception signals (RS1-RSn) in a baseband.

2. The RFIC of claim 1, wherein the plurality of transmission signals (TS1-TSm) and the plurality of reception signals (RS1-RSn) are frequency modulation continuous wave, FMCW, signals.

3. The RFIC of claim 1 or 2, wherein the transmission circuit (110, 110a) includes:
a transmission chain circuit (111) configured to process a baseband signal corresponding to the plurality of transmission signals (TS1-TSm);
a transmission switching circuit (TSW) including a second single port (SP2) coupled to the transmission chain circuit (111) and a plurality of second ports (Ps2), and configured to couple the second single port (SP2) to one second port among the plurality of second ports (Ps2) based on switching; and
a plurality of power amplifiers (PA1-PAm) coupled to the plurality of second ports (Ps2).

4. The RFIC of claim 1 or 2, wherein the transmission circuit (110, 110c) includes:
a digital-to-analog converter, DCA, (112) configured to output a baseband signal corresponding to the plurality of transmission signals (TS1-TSm) based on digital-to-analog, DA, conversion;
a frequency synthesizer (113) configured to perform at least one of frequency up conversion or frequency modulation on the baseband signal;
a plurality of phase shifters (PS1-PSm) configured to perform phase conversion on an output of the frequency synthesizer (113);
a plurality of driver amplifiers (DA1-DAm) configured to amplify outputs of the plurality of phase shifters (PS1-PSm); and
a plurality of power amplifiers (PA1-PAm) configured to amplify outputs of the plurality of driver amplifiers (DA1-DAm).

5. The RFIC of any one of claims 1 to 4, wherein the reception chain circuit (120) includes:
a mixer (MX) configured to perform frequency down conversion on an output of the plurality of low noise amplifiers (LNA1-LNAn) based on a local oscillator, LO, signal;
an analog baseband circuit (121) configured to output a baseband signal based on processing an output of the mixer (MX); and
an analog-to-digital converter, ADC, (122) configured to perform analog-to-digital, AD, conversion on the baseband signal.

6. The RFIC of any one of claims 1 to 5, wherein the reception switching circuit (RSW) is configured to sequentially switch the plurality of first ports (Ps1) during a unit time interval.

7. The RFIC of claim 6, wherein the unit time interval is defined as nTp, and
wherein "n" is the number of a plurality of reception antennas (RA1-RAn) corresponding to the plurality of reception signals (RS1-RSn) and Tp is a pulse repetition interval, PRI.

8. The RFIC of claim 6 or 7, wherein the transmission circuit (110, 110a, 110b) is configured to drive one transmission antenna among a plurality of transmission antennas (TA1-TAm) corresponding to the plurality of transmission signals (TS1-TSm) during the unit time interval.

9. The RFIC of claim 6 or 7, wherein the transmission circuit (110, 110c) is configured to drive all of a plurality of transmission antennas (TA1-TAm) corresponding to the plurality of transmission signals (TS1-TSm) during the unit time interval.

10. The RFIC of claim 3, wherein the transmission switching circuit (TSW) is configured to couple the one second port to the second single port (SP2) during a unit time interval.

11. The RFIC of claim 3, wherein the transmission circuit (110, 110a) is configured to sequentially switch the plurality of second ports during a unit time interval.

12. A radio frequency integrated circuit, RFIC, (100b) comprising:
a transmission circuit (110, 110a, 110b, 110c) configured to obtain a plurality of transmission signals (TS1-TSm);
a reception switching circuit (RSW) including a plurality of first ports (Ps1) and a first single port (SP1), and configured to couple one first port among the plurality of first ports (Ps1) to the first single port (SP1) based on switching;
a low noise amplifier (LNA) coupled to the first single port (SP1); and
a reception chain circuit (120) coupled to the low noise amplifier (LNA), and configured to process one reception signal corresponding to the one first port (SP1) from among a plurality of reception signals corresponding to the plurality of transmission signals (TS1-TSm) reflected from a target in a baseband.

13. The RFIC of claim 12, wherein the transmission circuit (110, 110b) includes:
a transmission chain circuit (111) configured to process a baseband signal corresponding to the plurality of transmission signals (TS1-TSm);
a power amplifier (PA) coupled to the transmission chain circuit (111); and
a transmission switching circuit (TSW) including a second single port (SP2) coupled to the power amplifier (PA) and a plurality of second ports (Ps2) coupled to a plurality of transmission antennas (TA1-TAm) corresponding to the plurality of transmission signals (TS1-TSm), and configured to couple the second single port (SP2) to one second port among the plurality of second ports (Ps2) based on switching.

14. The RFIC of claim 12 or 13, wherein the reception switching circuit (RSW) is configured to sequentially switch the plurality of first ports (Ps1) during a unit time interval.

15. The RFIC of claim 14, wherein the unit time interval is defined as nTp, and
wherein "n" is the number of a plurality of reception antennas corresponding to the plurality of reception signals and Tp is a pulse repetition interval, PRI.
